# EUROPÄISCHE PATENTSCHRIFT

(11) **EP 3 510 453 B1**
(45) Veröffentlichungstag und Bekanntmachung des Hinweises auf die Patenterteilung: **03.08.2022**
(21) Anmeldenummer: 17771355.9
(22) Anmeldetag: 06.09.2017
(51) Int. Cl.: G05B 19/042

(54) **KOMMUNIKATIONSVORRICHTUNG ZUM DURCHFÜHREN EINER STEUERUNGS-INTERAKTION ZWISCHEN EINER BEDIENELEKTRONIK UND EINEM STELLGERÄT**
CONTROL-INTERACTION METHOD AND COMMUNICATION DEVICE FOR CARRYING OUT A CONTROL INTERACTION BETWEEN AN ELECTRONIC OPERATING SYSTEM AND AN ACTUATING SYSTEM
PROCÉDÉ D'INTERACTION DE COMMANDE ET DISPOSITIF DE COMMUNICATION PERMETTANT D'EFFECTUER UNE INTERACTION DE COMMANDE ENTRE UNE COMMANDE ÉLECTRONIQUE ET UN APPAREIL DE RÉGLAGE

(30) Priorität: 12.09.2016 DE 102016117073
(43) Veröffentlichungstag der Anmeldung: 17.07.2019
(73) Patentinhaber: Samson Aktiengesellschaft, 60314 Frankfurt am Main (DE)
(72) Erfinder: KIESBAUER, Jörg, 64859 Eppertshausen (DE); OBERHEIM, Rainer, 64625 Bensheim (DE)
(74) Vertreter: Schmid, Nils T.F.
(86) Internationale Anmeldenummer: PCT/EP2017/072380
(87) Internationale Veröffentlichungsnummer: WO 2018/046556

(56) Entgegenhaltungen:
- EP-A1- 2 998 652
- DE-T2- 69 717 838
- US-A1- 2011 054 828

## Beschreibung

Die Erfindung betrifft eine Kommunikationsvorrichtung zum Durchführen einer Steuerungs-Interaktion zwischen einer Bedienelektronik und einem Stellgerät, beispielsweise ein Stellventil, eine Pumpe oder dergleichen, zum Einstellen einer Prozessfluidströmung einer prozesstechnischen Anlage, wie einer chemischen Anlage, insbesondere einer petrochemischen Anlage, einer lebensmittelverarbeitenden Anlage, ein Kraftwerk oder dergleichen, das eine Steuerungs- und/oder Regelungselektronik zum Betätigen des Stellgeräts gemäß einem Stellgerätebefehl aufweist, wobei die Steuerungs- und/oder Regelungselektronik dazu ausgelegt ist, in Abhängigkeit eines vordefinierten Stellgerätebefehls, wie ein Stell-Sollwert, eine vorbestimmte Funktion insbesondere zur Betätigung des Stellgerät, auszuführen. Die Erfindung betrifft auch ein System, das wenigstens ein Stellgerät und wenigstens eine Kommunikationsvorrichtung umfasst. Ferner betrifft die Erfindung ein entsprechendes Steuerungs-Interaktions-Verfahren.

Für die Steuerung von Stellgeräten in prozesstechnischen Anlagen werden üblicherweise Prozesssteuerungsnetzwerke verwendet, die beispielsweise gemäß dem einschlägigen Fieldbus-Fundation-Standard; Profibus-Standard oder HART-Standard kommunizieren und aufgebaut sind. Der Aufbau und die Verwendung eines solchen Prozesssteuerungsnetzwerks wird beispielsweise in DE 697 17 838 T2 beschrieben. Bei dem bekannten Prozesssteuerungsnetzwerk werden die Prozesssteuerfunktionen auf dezentrale Weise unter Verwendung einer Gruppe von Fieldbus-Einrichtungen implementiert. Das beschriebene Prozesssteuerungsnetzwerk umfasst standardisierte physikalische Schnittstellen für eine Zweidrahtschleife, welche alle einzelnen Feldgeräte, wie Sensoren, Betätiger, Steuereinheiten, Ventile, usw., miteinander verbindet, die in der prozesstechnischen Anlage vorhanden sind. Auf diese Weise wird mit dem in DE 697 17 838 T2 beschriebenen Prozesssystemnetzwerk ein physikalisches LAN (Local Area Network) von Feldgeräten innerhalb der prozesstechnischen Anlage gebildet, was es den einzelnen Feldgeräten der Anlage ermöglicht, Steuerfunktionen an verteilten Stellen innerhalb der Anlage auszuführen und vor und nach der Durchführung der Steuerfunktionen miteinander zu kommunizieren. Die Kommunikation gemäß dem Fieldbus-Protokoll, wie in DE 697 17 838 T2 beschrieben, erlaubt die Verteilung von Steuerfunktionen innerhalb des gesamten Prozesssteuerungsnetzwerks, um die Komplexität einer zentralen Steuerung oder Leiteinrichtung zu verringern oder vollständig zu vermeiden. Das lokale Prozessteuerungsnetzwerk umfasst ferner eine Schnittstelle zu einer externen Steuerkonsole, die von dem Prozesssteuernetzwerk das Durchführen von Diagnosetests anfordern kann. Zu diesem Zweck kann gemäß DE 697 17 838 T2 die externe Steuerkonsole bzw. DCS-Steuereinheit so konfiguriert sein, dass per Sollwertvorgabe die verschiedenen Geräte innerhalb der prozesstechnischen Anlage direkt angesteuert werden und die Ausgangswerte der Geräte oder andere Prozessparameter gemessen werden. Anhand der Messwerte kann schließlich ein Diagnoseergebnis ermittelt werden, auf dessen Basis beispielsweise Wartungsarbeiten durchgeführt werden können.

Bei der Verwendung eines Prozesssteuerungsnetzwerks besteht insbesondere bei prozesstechnischen Anlagen wie petrochemischen Anlagen oder Kraftwerken das Problem, dass durch unsachgemäßen Gebrauch einer externen Steuerkonsole, die an sich nur zur Durchführung von Diagnosen vorgesehen ist, die Prozessteuerung der Anlage derart beeinträchtigt werden kann, dass sicherheitskritische Zustände auftreten. Insbesondere der Zugriff unbefugter Dritter auf eine externe Steuerkonsole birgt das Risiko, dass durch bewusstes Auslösen eines Feldgeräte-Steuerungsbefehls von der externen Konsole ein sensibler Prozess derart gestört werden kann, dass die prozesstechnische Anlage beschädigt wird oder eine automatische Notabschaltung erfolgt, die zwar Schäden an der Anlage selbst vermeidet, jedoch unerwünschte Standzeiten zur Folge hat.

Es ist Aufgabe der Erfindung, die Nachteile des Stands der Technik zu überwinden, insbesondere unsachgemäße Bedienung von Stellgeräten einer prozesstechnischen Anlage infolge von Bedienfehlern oder unerlaubtem Zugriff unter der Verwendung von externen Steuerkonsolen zu verhindern.

Diese Aufgabe wird durch die Merkmale der unabhängigen Ansprüche gelöst.

Danach ist eine Kommunikationsvorrichtung zum Durchführen einer Steuerungs-Interaktion zwischen einer Bedienelektronik, wie einer Steuerungskonsole, einem Computer, einem Smartphone, einem Tablet oder dergleichen, und einem Stellgerät, beispielsweise ein Stellventil, eine Pumpe oder dergleichen, zum Einstellen einer Prozessfluidströmung einer prozesstechnischen Anlage, wie eine chemische Anlage, insbesondere eine petrochemischen Anlage, eine lebensmittelverarbeitende Anlage, ein Kraftwerk oder dergleichen, vorgesehen, wobei das Stellgerät eine Steuerungs- und/oder Regelungselektronik zum Betätigen des Stellgeräts gemäß einem Stellgerätebefehl aufweist und wobei die Steuerungs- und/oder Regelungselektronik des Stellgeräts dazu ausgelegt ist, in Abhängigkeit von vordefinierten Stellgerätebefehlen, wie Stell-Sollwerten, vorbestimmte Funktionen insbesondere zur Betätigung des Stellgeräts auszuführen. Vorzugsweise bildet das Stellgerät zusammen mit einer Regelungselektronik ein Feldgerät. Das Stellgerät kann beispielsweise ein Stellventil mit elektrischem oder pneumatischem Stellantrieb sein, wobei das Ventilgehäuse des Stellventils mit dem Stellantrieb mittels eines Oberteils, wie einem Joch, einer Laterne oder einer Antriebsstangen- oder Antriebswellenführung, verbunden sein kann. Die Steuerungs- und/oder Regelungselektronik kann beispielsweise in einem eigenen Gehäuse eingefasst und unmittelbar an dem Stellgerät, insbesondere an dem Oberteil, befestigt sein oder gemeinsam mit dem Stellgerät in einem Stege- oder Feldgerätgehäuse untergebracht sein.

Ein Stellgerätebefehl kann beispielsweise ein Stell-Sollwert sein, der zum Beispiel einer gewünschten Soll-Position eines Stellventils oder einem gewünschten Soll-Volumens oder Soll-Drucks einer Stellpumpe entspricht. Ein Stellgerätebefehl kann eine Stell-Sollwert-Abfolge, beispielsweise zur Durchführung eines Hysterestests, eines Partial-Stroke-Tests oder dergleichen, umfassen. Ein Stellgerätebefehl kann auch ein Not-Schließ- oder ein Not-Auf-Befehl sein. Ein Stellgerätebefehl kann beispielsweise ein analoges, vorzugsweise 4..20 mA-Signal sein. Insbesondere kann ein Stellgeräte-Befehl digital sein, insbesondere formatiert sein als Profibus-, HART- oder Fieldbus-Signal. In der Steuerungs- und/oder Regelungselektronik ist die vorbestimmte Zuordnung von Stellgerätebefehlen zu durchzuführenden (Betätigungs-) Funktionen des Stellgeräts durch Hardware und/oder Software implementiert. Vorzugsweise umfasst die Steuerungs- und/oder Regelungselektronik einen Mikroprozessor, einen Controller oder andere analoge oder digitale Logikschaltung zum Zuordnen einer Stellgeräte- (Betätigungs-) Funktion zu einem Stellgerätebefehl.

Die erfindungsgemäße Kommunikationsvorrichtung umfasst eine erste Kommunikationsschnittstelle zum Empfangen von elektrischen Signalen, wie Stellgeräte-Befehle, von der Bedienelektronik. Die erste Kommunikationsschnittstelle kann folglich auch als Empfangs- oder Transceiver-Schnittstelle bezeichnet sein. Die erste Kommunikationsschnittstelle kann analoge oder digitale, beispielsweise kabelgebunden übertragene Signale, wie Strom- oder Spannungs-Signale, empfangen und/oder kabellos übertragene, beispielsweise elektromagnetische Signale empfangen. Ferner umfasst die erfindungsgemäße Kommunikationsvorrichtung eine zweite Kommunikationsschnittstelle zum Senden von elektrischen Stellgerätebefehlen an das Stellgerät. Die zweite Kommunikationsschnittstelle kann Stellgerätebefehle insbesondere an die Steuerungs- und/oder Regelungselektronik zum Betätigen des Stellgeräts senden, um der Stellgeräteelektronik vorzugeben, gemäß welchem Stellgerätbefehl eine vorbestimmte Funktion des Stellgeräts auszuführen ist.

Erfindungsgemäß umfasst die Kommunikationsvorrichtung einen elektronischen Zulässigkeitsprüfer mit einem Datenspeicher, in dem eine Reihe von zulässigen Stellgerätebefehlen hinterlegt ist, wobei der Zulässigkeitsprüfer dazu eingerichtet ist, in Abhängigkeit von einem mittels der ersten Kommunikationsschnittstelle empfangenen elektrischen Signal die zweite Kommunikationsschnittstelle zu veranlassen, entweder keinen Stellgerätebefehl oder einen der zulässigen Stellgerätebefehle an das Stellgerät zu senden. Durch Verwendung des elektronischen Zulässigkeitsprüfers wird mit der erfindungsgemäßen Kommunikationsvorrichtung sichergestellt, dass ausschließlich zulässige Stellgerätebefehle von einer Bedienelektronik, wie einer externen Steuerungskonsole, an ein Stellgerät einer prozesstechnischen Anlage übermittelbar sind. Durch Verwendung des Zulässigkeitsprüfers kann sichergestellt werden, dass beispielsweise nur sicherheitsunkritische Befehle durch Verwendung einer Bedienelektronik und insbesondere einer externen Steuerungskonsole, wie einem Smartphone oder dergleichen, zur Betätigung eines Stellgeräts ausgelöst werden können. Auf diese Weise wird eine Sicherheitsbarriere bereitgestellt, die eine unsichere Ansteuerung des Stellgeräts der prozesstechnischen Anlage durch Bedienfehler oder Missbrauch ausschließt. Die Kommunikationsvorrichtung dient insofern als Filtervorrichtung, die nur als zulässig vorbestimmte und in dem Datenspeicher des Zulässigkeitsprüfers abgelegte Stellgerätebefehle durch die insbesondere externe Bedienelektronik dem Stellgerät vorzugeben gestattet, und/oder die verhindert, dass mittels der insbesondere externen Bedienelektronik ein Benutzer, der Zugriff (nur) auf die Bedienelektronik hat, die Funktionalität des Stellgeräts in vollem Umfang beeinflussen kann. Die erfindungsgemäße Kommunikationsvorrichtung kann ferner vorzugsweise ausschließen, dass insbesondere ausgehend von einer externen Bedienelektronik Schadsoftware auf den Stellungsregler, insbesondere die stellungsreglereigene Software und/oder Hardware zugreifen und diese(n) beschädigen kann.

Zulässige Stellgerätebefehle können beispielsweise definiert sein in Form eines erlaubten Stellbereichs für ein Stellventil, beispielsweise 80% des gesamten Stellventils, und/oder beispielsweise zwischen einer 10% und einer 90% geöffneten Stellung. Es ist alternativ denkbar, dass nur ein kleiner Stellbereich von beispielsweise 5% oder 10% des Bereichs insbesondere nahe einer vordefinierten Stellgeräte-Sollstellung, beispielsweise einer von einer Leitwarte aktuell vorgegebenen Soll-Stellung, einer vollständig geöffneten Stellung, einer vollständig geschlossenen Stellung oder dergleichen, einen Rahmen für zulässige Stellgerätebefehle bildet, der in dem Datenspeicher des elektronischen Zulässigkeitsprüfers hinterlegt ist. Es ist weiterhin alternativ denkbar, dass für vorbestimmte Stellgeräte wenigstens eine Funktionsroutine als zulässiger Stellgerätebefehl in dem Datenspeicher des elektronischen Zulässigkeitsprüfers hinterlegt ist, beispielsweise eine vorbestimmte Partial-Stroke-Routine oder dergleichen. Ferner ist denkbar, dass vorbestimmte, spezifische Stellgerätebefehle in dem Datenspeicher hinterlegt sind, beispielsweise für einem Stellventil vorbestimmte Positions-Sollwerte entsprechend etwa 30%, 40%, 50%, 60% und/oder 70% geöffneter Stellung, oder beispielsweise für 10%, 20%, 30%, 40% und/oder 50% der maximalen Pumpenleistung.

Ein zulässiger Stellgerätebefehl kann beispielsweise auch ein solcher Befehl sein, der die Stellgeräteelektronik bzw. das Stellgerät an sich zur Rückgabe eines Antwortsignals veranlasst, insbesondere eine Sensor- und/oder Aktor-Funktionalität des Stellgeräts zu veranlassen, wie ein Verfahren in eine Sollposition oder den Betrieb mit einer Soll-Leistung oder dergleichen. Ein Antwort-Signal, das durch einen zulässigen Stellgerätebefehl angefordert wird, kann beispielsweise einen Ist-Betriebszustand des Stellgeräts betreffen, wie einen Ist-Druck, eine Ist-Position, eine Ist-Leistung oder dergleichen, oder eine andere stellgerätspezifische Information, beispielsweise einen Soll-Zustand oder eine Ist-Abweichung von einem Soll-Zustand, ein vom dem Stellgerät oder dessen Steuerungs- und/oder Regelungselektronik ermitteltes Diagnoseergebnis oder dergleichen. Zulässige Stellgerätebefehle können insbesondere als binäre Sequenzen formatiert sein. Besonders bevorzugt sind die zulässigen Stellgerätebefehle derart in dem Datenspeicher hinterlegt, dass es der Bedienelektronik unmöglich ist, vorbestimmte zulässige Stellgerätebefehle zu modifizieren, insbesondere zu löschen, zu ändern und/oder hinzufügen.

Gemäß einer bevorzugten Ausführung der erfindungsgemäßen Kommunikationsvorrichtung ist der Zulässigkeitsprüfer dazu eingerichtet, einen Vergleich eines mittels der ersten Kommunikationsschnittstelle von der Bedienelektronik empfangenen Signals mit der Reihe von zulässigen Stellgerätebefehlen durchzuführen, um zu erkennen, ob in dem Datenspeicher ein zulässiger Stellgerätebefehl entsprechend dem empfangenen Signal hinterlegt ist, und wobei der Zulässigkeitsprüfer ferner dazu eingerichtet ist, falls in dem Datenspeicher ein zulässiger Stellgerätebefehl entsprechend dem empfangenen Signal hinterlegt ist, die zweite Kommunikationsschnittstelle zu veranlassen, diesen zulässigen, dem empfangenen Signal entsprechenden Stellgerätebefehl an das Stellgerät zu senden. Vorzugsweise ist der Zulässigkeitsprüfer zur Durchführung eines Identitäts-Vergleichs zwischen dem empfangenen Signal und dem zulässigen Stellgerätebefehl ausgelegt. Alternativ kann der Zulässigkeitsprüfer zur Durchführung eines Näherungs-Vergleichs ausgelegt sein, wobei ein Empfang-Signal, beispielsweise ein Soll-Stellsignal, durch den Zulässigkeitsprüfer ein nicht notwendigerweise identischer, lediglich ähnlicher Stellgerätebefehl zugeordnet wird. Beispielsweise kann der Zulässigkeitsprüfer eine Reihe von spezifischen vordefinierten Soll-Stellwerten umfassen und abhängig von dem empfangenen Signal ein vorzugsweise nächstkommendes Soll-Stellsignal zum Versand an das Stellgerät zuordnen.

Bei einer bevorzugten Ausführung einer erfindungsgemäßen Kommunikationsvorrichtung ist der Zulässigkeitsprüfer ferner dazu eingerichtet, eine auf das mittels der ersten Kommunikationsschnittstelle empfangene Signal bezogene Berechtigungsprüfung durchzuführen. Insbesondere kann der Zulässigkeitsprüfer dazu eingerichtet sein, zu prüfen, ob das mittels der ersten Kommunikationsschnittstelle empfangene Signal eine Berechtigungskennung umfasst, und nur bei Erkennen einer Berechtigungskennung die zweite Kommunikationsschnittstelle zu veranlassen, einen zulässigen Stellgerätebefehl zu senden. Der Zulässigkeitsprüfer ist also dazu ausgelegt, eine Zulässigkeits- und zusätzlich eine Berechtigungsprüfung durchzuführen. Eine Berechtigungskennung kann beispielsweise eine Codierung, ein Schlüssel-Code oder dergleichen sein, welcher insbesondere einem bestimmten Benutzer und/oder einer bestimmten Bedienelektronik zugeordnet ist und vorzugsweise dessen bzw. deren Berechtigung zum Betätigen des Stellgeräts angibt oder impliziert. Es ist denkbar, dass unterschiedliche Nutzer oder unterschiedliche Bedienelektronik-Einheiten unterschiedlichen individuellen Berechtigungskennungen zugeordnet sind, sodass beispielsweise unterschiedliche Benutzer oder Bedienelektronik-Einheiten zur Durchführung unterschiedlicher zulässiger Stellgerätebefehle autorisiert sind.

Bei einer bevorzugten Ausführung einer erfindungsgemäßen Kommunikationsvorrichtung weist der Datenspeicher, in dem die Reihe von zulässigen Stellgerätebefehlen hinterlegt ist, einen mechanischen und/oder elektronischen Schreibschutz auf, der verhindert, dass die in dem Datenspeicher hinterlegten Stellgerätebefehle durch ein mittels der ersten Kommunikationsschnittstelle empfangenes Signal veränderbar sind. Alternativ oder zusätzlich kann der Datenspeicher einen mechanischen und/oder elektronischen Schreibschutz aufweisen, der einen Schreibzugriff auf den Datenspeicher, vorzugsweise exklusiv mittels einer dritten Kommunikationsschnittstelle an der Kommunikationsvorrichtung zulässt, insbesondere einer Hardware-Schnittstelle, wie einem Steckkontakt, beispielsweise einem seriellen Steckkontakt oder einem USB-Steckkontakt, unmittelbar an der Kommunikationsvorrichtung. Auf diese Weise kann sichergestellt werden, dass die vorbestimmte Reihe zulässiger Stellgerätebefehle, welche mithilfe der beispielsweise externen Bedienelektronik, wie einem Smartphone, veranlassbar sind, ausschließlich durch unmittelbaren direkten physikalischen, insbesondere mechanischen, Zugriff lokal vor Ort in der prozesstechnischen Anlage auf das zu steuernde Stellgerät definiert und gegebenenfalls modifiziert werden kann. Das heißt, dass zum Modifizieren der Liste zulässiger Stellgerätebefehle, insbesondere zum Hinzufügen, Ändern oder Entfernen zulässiger Stellgerätebefehle, die Person, welche definiert, welche Stellgerätebefehle als zulässig in dem Datenspeicher des elektronischen Zulässigkeitsprüfers hinterlegt sind, zwingend persönlich vor Ort an dem relevanten Stellgerät arbeiten muss, sodass sie sich zuvor beispielsweise bei sicherheitskritischen Anlagen, wie petrochemischen Anlagen oder Kraftwerken, wie Nuklearkraftwerken, einer Sicherheitskontrolle unterziehen muss, sodass sichergestellt ist, dass ein unbefugter Zugriff ausgeschossen ist. Es sei klar, dass die dritte Kommunikationsschnittstelle eine vorbestimmte Sicherheits-Schnittstelle ist, die sich zwingend von der ersten Schnittstelle unterscheidet.

Gemäß einer bevorzugten Ausführung einer erfindungsgemäßen Kommunikationsvorrichtung ist die Kommunikationsvorrichtung, insbesondere deren zweite Kommunikationsschnittstelle dazu eingerichtet, Betriebsdaten, wie Ventilstellung, Regeldifferenz, Stellsignal, Stellgerätesignatur, Stellgerätehysterese oder dergleichen, von dem Stellgerät zu empfangen, wobei der Zulässigkeitsprüfer ferner dazu eingerichtet ist, in Abhängigkeit von den empfangenen Betriebsdaten das Veranlassen des Versands von Stellgerätebefehlen an das Stellgerät, insbesondere dessen Steuerungs- und/oder Regelungselektronik, zu gestatten und/oder zu verhindern. Zusätzlich oder alternativ kann insbesondere die zweite Kommunikationsschnittstelle dazu eingerichtet sein, Betriebsdaten beim Versenden des zulässigen Stellgerätebefehls zu berücksichtigen. Die Kommunikationsvorrichtung ist also dazu eingerichtet, neben der Zulässigkeitsprüfung zusätzlich eine Betriebszustandsprüfung sowie gegebenenfalls zusätzlich eine Berechtigungsprüfung durchzuführen. Mithilfe der Berücksichtigung von Betriebsdaten beispielsweise durch die zweite Kommunikationsschnittstelle kann die Sicherheit der Steuerung weiter erhöht werden, indem unter bestimmten Bedingungen gewährleistet ist, dass zwar für sich genommen zulässige, sichere Stellgerätebefehle in der speziellen Situation dennoch nicht von der Kommunikationsvorrichtung an das Stellgerät versandt werden. Beispielsweise kann bei einem Betrieb eines Stellgeräts unter Hochleistung verhindert werden, dass ein durch eine Bedienelektronik gewünschter Hysterese-Test oder dergleichen ausgeführt wird. Es ist auch denkbar, dass während der Durchführung eines Tests des Stellgeräts, der durch die Leitwarte oder durch eine Bedienelektronik veranlasst wurde, kein weiterer Test durch eine Bedienelektronik gestartet wird. Alternativ oder zusätzlich ist die Kommunikationsvorrichtung, insbesondere deren erste Kommunikationsschnittstelle, vorzugsweise eine Transceiver-Schnittstelle, dazu ausgelegt, Betriebsdaten von dem Stellgerät an die Bedienelektronik zu versenden. Die Kommunikationsvorrichtung kann somit der Bedienelektronik Betriebsdaten, wie Messwerte, Diagnoseergebnisse oder dergleichen, übermitteln, sodass die Bedienelektronik die Betriebsdaten anzeigen kann, oder auf Basis der Betriebsdaten (weitere) Diagnoseroutinen durchführen kann.

Gemäß einer bevorzugten Ausführung umfasst die Kommunikationsvorrichtung, insbesondere deren erste Kommunikationsschnittstelle bzw. eine Kommunikationselektronik, wie ein Mikrocontroller oder Mikroprozessor, der Kommunikationsvorrichtung, eine Interpreter-Vorrichtung, die dazu ausgelegt ist, die von einer Bedienelektronik empfangenen elektrischen Signale in vorzugsweise normierte von der Bedienelektronik unabhängige und/oder stellgerätespezifische elektrischen Signale, insbesondere für den Zulässigkeitsprüfer, vorzugsweise zum Vergleich mit den in dem Datenspeicher hinterlegten zulässigen Stellgerätebefehle, umzuwandeln. Eine Interpreter-Vorrichtung kann beispielsweise dazu ausgestaltet sein, elektrische Signale unterschiedlichen Formats und/oder unterschiedlicher Bedienelektronik-Einheiten, etwa einerseits Smartphones mit einem Android-Betriebssystem und andererseits Smartphones mit einem Windows-Betriebssystem oder einem iOS-Betriebssystem, zu empfangen und eine Umwandlung vorzunehmen insbesondere in Stellgerätebefehle, die beispielsweise von dem Betriebssystem des Smartphones unabhängig sind, um einen einfachen Vergleich mit den in dem Datenspeicher des Zulässigkeitsprüfers hinterlegten zulässigen vorzugsweise stellgerätespezifischen formatierten Stellgerätebefehlen zu gestatten. Die Interpreter-Vorrichtung kann alternativ oder zusätzlich dazu ausgestaltet sein, eine stellgerätespezifische Umwandlung der eingehenden elektrischen Signale vorzunehmen, nämlich in elektrische Stellgerätebefehle entsprechend einem speziellen Stellgerät, welches der Kommunikationsvorrichtung zugeordnet ist. Beispielsweise kann abhängig von dem Typ des zu steuernden Stellgeräts je nach dessen Konfiguration ein HART-Befehl, ein Fieldbus-Befehl oder ein analoges 4..20-mA-Signal zur Steuerung erforderlich sein.

Ferner betrifft die Erfindung ein System, das wenigstens ein Stellgerät umfasst, beispielsweise ein Stellventil, eine Pumpe oder dergleichen, zum Einstellen einer Prozessfluidströmung einer prozesstechnischen Anlage, wie eine chemische Anlage, insbesondere eine petrochemisehe Anlage, eine lebensmittelverarbeitende Anlage, ein Kraftwerk oder dergleichen, sowie wenigstens eine Kommunikationsvorrichtung wie oben beschrieben, sowie gegebenenfalls wenigstens eine Bedienelektronik. Vorzugsweise umfasst das System ein Prozesssteuerungsnetzwerk mit mehreren Stellgeräten, vorzugsweise unterschiedlicher Art. Insbesondere kann das System zwei, drei, vier oder mehrere Kommunikationsvorrichtungen wie oben beschrieben aufweisen, die unterschiedlich konfiguriert sein können, beispielsweise derart, dass je eine Kommunikationsvorrichtung in einem Prozesssteuernetzwerk je genau einem Stellgerät oder je wenigstens einem Stellgerät zugeordnet ist. Das System kann insbesondere mehrere Kommunikationsvorrichtungen umfassen, die signalübertragungsgemäß miteinander verbunden sind. Vorzugsweise können mehrere Kommunikationsvorrichtungen über deren jeweilige zweite Kommunikationsschnittstelle, vorzugsweise mittels eines Bus-Systems, wie einem HART-Bus-System, einem Fieldbus-System oder dergleichen, signalübertragungsgemäß miteinander verbunden sein.

Es ist denkbar, dass ein System mit einem Prozesssteuernetzwerk, das mehrere Stellgeräte umfasst, eine geringere Anzahl von Kommunikationsvorrichtungen als Stellgeräte aufweist, vorzugsweise nur eins, zwei oder drei Kommunikationsvorrichtungen, wobei eine oder mehrere Kommunikationsvorrichtungen dazu ausgestaltet sein können, die Kommunikation zwischen wenigstens einer Bedienelektronik und mehreren Stellgeräten mit einem oder mehreren Zulässigkeitsprüfern wie oben beschrieben zu kontrollieren bzw. zu filtern, sodass auf diese Art mit einer Kommunikationsvorrichtung eine dezentrale Leitwarte realisiert sein kann. Eine prozesstechnische Anlage kann beispielsweise mehrere dezentrale Prozesssteuerungsnetzwerke aufweisen, die je eine Kommunikationsvorrichtung aufweist, welche eine übergeordnete Regelungsfunktion hinsichtlich der Stellgeräte der Prozesssteuernetzwerk-Untergruppe realisiert. Vorzugsweise ist die wenigstens eine Kommunikationsvorrichtung mit den mehreren Stellgeräten sowie gegebenenfalls den weiteren Kommunikationsvorrichtungen über ein Bussystem, wie ein HART-Bussystem oder dergleichen, signalübertragungsgemäß verbunden. Alternativ kann das gesamte Prozesssteuerungsnetzwerk einer prozesstechnischen Anlage eine als dezentrale Leitstation wirkende Kommunikationsvorrichtung aufweisen.

Die Erfindung betrifft auch ein Steuerungs-Interaktions-Verfahren, welches umfasst, dass eine Reihe von zulässigen Stellgerätebefehlen definiert werden, wie Stell-Sollwerte, zum Veranlassen vorbestimmter Funktionen insbesondere zur Betätigung eines Stellgeräts, beispielsweise eines Stellventils, einer Pumpe oder dergleichen, vorzugsweise zum Einstellen einer Prozessfluidströmung einer prozesstechnischen Anlage, wie eine chemische Anlage, insbesondere eine petrochemische Anlage, eine lebensmittelverarbeitende Anlage, ein Kraftwerk oder dergleichen. Das erfindungsgemäße Steuerungs-Interaktions-Verfahren umfasst ferner, dass von einer Bedienelektronik, wie einem Smartphone, einem Tablet, einer Steuerungskonsole oder dergleichen, ein Signal, wie ein Stellgerätebefehl, versandt wird und dass das Signal durch eine Kommunikationsvorrichtung empfangen und durch die Kommunikationsvorrichtung geprüft wird, und dass ferner durch die Kommunikationsvorrichtung in Abhängigkeit von dem Signal entweder kein Stellgerätebefehl oder einer der zulässigen Stellgerätebefehle an ein Stellgerät versendet wird. Die vordefinierten zulässigen Stellgerätebefehle sind der Kommunikationsvorrichtung vorgegeben, welche von einer Bedienelektronik, wie einem Smartphone, ein Signal wie einen Stellgerätebefehl, empfängt. Das von der Bedienelektronik empfangene Signal wird durch die Kommunikationsvorrichtung im Hinblick darauf geprüft, ob das Signal einem der vordefinierten zulässigen Stellgerätebefehle zugeordnet werden kann. Falls eine Zuordnung des empfangenen Befehls zu einem der zulässigen Stellgerätebefehle möglich ist, so wird dieser zulässige Stellgerätebefehl an ein vorzugsweise der Kommunikationsvorrichtung vordefiniert zugeordnetes Stellgerät versendet. Wenn die Kommunikationsvorrichtung von einer Bedienelektronik ein Signal empfängt, dem sie keinen zulässigen Stellgerätebefehl zuordnen kann, wird durch die Kommunikationsvorrichtung kein Stellgerätebefehl versandt.

Gemäß einer bevorzugten Ausführung eines erfindungsgemäßen Steuerungs-Interaktions-Verfahrens umfasst die Prüfung des Signals, dass geprüft wird, ob das Signal einem Stellgerätebefehl der Reihe zulässiger Stellgerätebefehle entspricht, wobei hiernach der dem Signal entsprechende Stellgerätebefehl versendet wird. Beispielsweise kann die Kommunikationsvorrichtung oder eine Untereinheit der Kommunikationsvorrichtung, etwa ein Zulässigkeitsprüfer, einen Identitäts-Vergleich oder einen näherungsweisen Vergleich des durch die Kommunikationsvorrichtung von der Bedienelektronik empfangenen Signals im Hinblick auf die Reihe der vordefinierten zulässigen Stellgerätebefehle durchführen, beispielsweise wie oben beschrieben.

Bei einer bevorzugten Ausführung eines erfindungsgemäßen Steuerungs-Interaktions-Verfahrens wird eine auf das empfangene Signal bezogene Berechtigungsprüfung durchgeführt, wobei insbesondere geprüft wird, ob das empfangene Signal eine Berechtigungskennung umfasst, und wobei ausschließlich dann, wenn eine Berechtigungskennung erkannt wird, ein zulässiger Stellgerätebefehl übermittelt wird. Indem im Rahmen des Steuerung-Interaktion-Verfahrens eine Berechtigungsprüfung erfolgt, wird der Zulässigkeitsprüfung eine zweite Sicherheitsmaßnahme hinzugefügt, um sicherzustellen, dass die Bedienelektronik bzw. die sie benutzende Person über ausreichende Befugnis verfügt, einen gewünschten, gegebenenfalls als zulässig definierten Stellgerätebefehl zu veranlassen.

Gemäß einer bevorzugten Ausführung eines Steuerungs-Interaktions-Verfahrens umfasst das Definieren der Reihe von zulässigen Stellgerätebefehlen, dass ein mechanischer und/oder elektronischer Schreibschutz der Kommunikationsvorrichtung deaktiviert bzw. in einen inaktiven Zustand gebracht wird, welcher insbesondere in einem standardmäßig aktivierten Zustand verhindert, dass die, vorzugsweise in einem Datenspeicher der Kommunikationsschnittstelle bzw. des Zulässigkeitsprüfers hinterlegten, als zulässig vordefinierten Stellgerätebefehle durch ein vorzugsweise mittels der ersten Kommunikationsschnittstelle von einer Bedienelektronik empfangenes Signal verändert werden und/oder wobei das Definieren der Reihe von zulässigen Stellgerätebefehlen exklusiv über eine physikalische, mechanische und/oder elektronische Kommunikationsschnittstelle durchgeführt werden kann. Zum Definieren der Reihe zulässiger Stellgerätebefehle wird bei dieser Ausführung des erfindungsgemäßen Steuerungs-Interaktions-Verfahrens ein unmittelbarer Zugriff vom Bedienpersonal auf die Hardware der Kommunikationsschnittstelle vor Ort erzwungen, indem eine Schreibsicherung in die Kommunikationsschnittstelle implementiert wird, die verhindert, dass die vordefinierte Reihe zulässiger Stellgerätebefehle durch eine Bedienelektronik veränderbar ist. Anders gesagt wird durch die Hardware der Kommunikationsschnittstelle vorgegeben, dass zum Definieren der Reihe zulässiger Stellgerätebefehle zwingend ein anderer Kommunikationsweg zu verwenden ist als zum Auslösen eines der zulässigen Stellgerätebefehle.

Gemäß einer weiteren bevorzugten Ausführung des erfindungsgemäßen Steuerungs-Interaktions-Verfahrens, welches mit den vorherigen kombinierbar ist, werden durch die Kommunikationsvorrichtung Betriebsdaten von dem Stellgerät empfangen, beispielsweise Betriebsdaten wie Ventilstellung, Regeldifferenz, Stellsignale, Stellgerätesignatur-Informationen, Stellgerätehysterese-Informationen oder dergleichen, wobei insbesondere die oben beschriebene Prüfung in Abhängigkeit von diesen empfangenen Betriebsdaten durchgeführt wird und im Ergebnis gestattet oder verhindert, dass zulässige Stellgerätebefehle versendet werden. Alternativ oder zusätzlich wird die Betriebsdatenbank beim Versenden eines Stellgerätebefehls berücksichtigt. Beispielsweise kann eine Stellgeräte-Betriebsdatenabhängige Prüfung des von der Bedienelektronik empfangenen Signals eine weitere Sicherungsvorkehrung dahingehend erlauben, dass, selbst wenn das Signal einem zulässigen Stellerätebefehl zugeordnet werden kann und gegebenenfalls auch von einer autorisierten Bedienelektronik empfangen wurde, dennoch der zulässige Stellgerätebefehl unter vorbestimmten Umständen zum Beispiel dann nicht versandt wird, wenn ein Betriebsdatum erkannt wird, bei dessen Vorliegen, etwa gemäß einer Prüfungsroutine, das Versenden jeglichen bzw. des zugeordneten zulässigen Stellgerätebefehls verhindert wird. Ein solches Betriebsdatum kann beispielsweise ein Not-Schließ-Zustand eines Stellventils sein, bei dessen Vorliegen ein durch eine Bedienelektronik ausgelöster Hysterese-Test nicht stattfinden darf. Die Prüfung kann auch unter Berücksichtigung einer von dem Stellgerät an einer Kommunikationsvorrichtung übersandten Regeldifferenz erfolgen, sodass dem von der Bedienelektronik empfangenen Signal zunächst ein (erster) Stellgerätebefehl hinsichtlich einer Soll-Stellung zugeordnet wird, welcher gemäß der Regeldifferenz korrigiert wird, sodass ein sich um die Regeldifferenz von dem (ersten) Stellgerätbefehl unterscheidender (zweiter) Stellgerätebefehl von der Kommunikationsvorrichtung an das Stellgerät versandt wird.

Alternativ oder zusätzlich werden durch die Kommunikationsvorrichtung, insbesondere durch deren erste Kommunikationsschnittstelle, Betriebsdaten von dem Stellgerät an die Bedienelektronik versendet. Vorzugsweise umfasst das Steuerung-Interaktions-Verfahren ferner, dass eine Weiterverarbeitung der Betriebsdaten mittels der Bedienelektronik durchgeführt wird, beispielsweise eine Anzeige von Betriebsdaten durch die Bedienelektronik, und/oder das Durchführen von einer oder mehreren Diagnoseroutinen durch die Bedienelektronik.

Gemäß einer weiteren bevorzugten Ausführung eines erfindungsgemäßen Steuerungs-Interaktion-Verfahrens wird nach dem Signalempfang und vorzugsweise vor der Signalprüfung das Signal, welches von der Bedienelektronik versandt und durch die Kommunikationsvorrichtung empfangen wurde, insbesondere durch eine Interpreter-Vorrichtung in ein vorzugsweise normiertes Bedienelektronik-unabhängiges und/oder stellgerätspezifisches Signalformat umgewandelt, insbesondere für die Prüfung, vorzugsweise zum Vergleich mit den vordefinierten zulässigen Stellgerätebefehlen. Der Schritt der Signal-Interpretation durch die Kommunikationsvorrichtung erlaubt es, nachgeschaltete Stellgeräte kompatibel zu unterschiedlichsten Bedienelektronik-Geräten zu gestalten, sodass trotz der raschen Fortentwicklung auf dem Mobilfunksektor ein langfristig brauchbares Kommunikationssystem bereitgestellt wird. Durch den Schritt der Signal-Interpretation kann gewährleistet werden, dass Signale unterschiedlichen Signalformats, beispielsweise von einem Smartphone mit Apple-iOS genauso gut verarbeitet werden kann, wie ein Signal von einem Smartphone mit Android-Betriebssystem.

Es sei klar, dass die Kommunikationsvorrichtung insbesondere zum Durchführen einer Steuerungs-Interaktion gemäß dem oben beschriebenen Steuerungs-Interaktions-Verfahrens ausgestaltet sein kann. Insbesondere ist das Steuerungs-Interaktions-Verfahren derart eingerichtet, dass es gemäß der Funktionalität der oben beschriebenen Kommunikationsvorrichtung bzw. des oben beschriebenen Systems verfahren kann. Das oben beschriebene System kann insbesondere dazu ausgestaltet sein, das Steuerungs-Interaktions-Verfahren durchzuführen. Weitere vorteilhafte Ausgestaltungen sind in den Unteransprüchen angegeben.

Weitere Merkmale, Eigenschaften und Vorteile der Erfindung werden durch die folgende Beschreibung einer bevorzugten Ausführung der Erfindung deutlich gemacht, in denen zeigt:

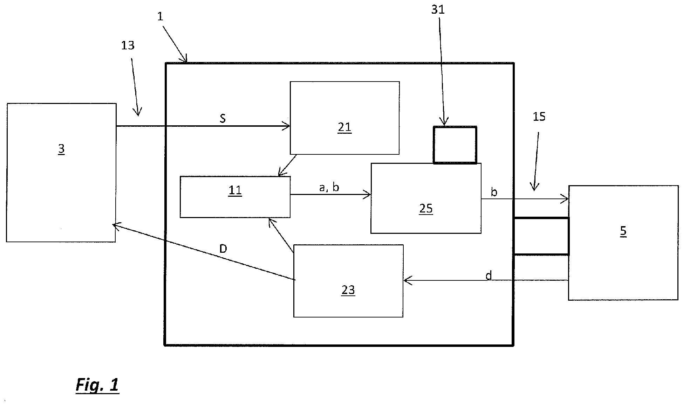

- Fig. 1: eine schematische Darstellung der Steuerungs-Interaktion in einem System mit einer erfindungsgemäßen Kommunikationsvorrichtung.

Die Kommunikationsvorrichtung, welche zwischen einem Feldgerät oder mehreren Feldgeräten eines Prozesssteuerungsnetzwerks auf der einen Seite und auf der anderen Seite einer Bedienelektronik wie einem Smartphone, einem Tablet, einer webbasierten App oder dergleichen eingesetzt wird, hat als eine Hauptaufgabe sicherzustellen, dass sicherheitskritische Zustände, Fehlfunktionen oder Schäden infolge von mutwilligen oder unbeabsichtigten Bedienfehlern durch den Benutzer einer Bedienelektronik ausgeschlossen werden. Zu diesem Zweck führt die Kommunikationsvorrichtung eine Filterfunktion dahingehend durch, dass ausschließlich solche Stellgerätebefehle, die als zulässig in der Kommunikationsvorrichtung vordefiniert sind, infolge von Auslöse-Signalen oder Stellgerätebefehl-Signalen von der Bedienelektronik initiierbar sind. Die Kommunikationsvorrichtung verfügt über eine positiv definierte Liste zulässiger Stellgerätebefehle, beispielsweise in Form einer Whitelist und/oder in Form von zulässigen Stellbereichen und/oder zulässigen Klassen von Befehlen, wie Abfrage-Signale, mit denen (nur) Ergebnisse abgefragt, aber keine Stell-Soll-Signale für ein Stellgerät erzeugt werden, und Stell-Signale, die eine oder mehrere Soll-Stellungen realisieren oder implizieren, und/oder Kombinationen daraus. Die Kommunikationsvorrichtung kann sicherstellen, dass bei Fernsteuerung eines Stellgeräts durch eine Bedienelektronik sich die Fernsteuerung durch die Bedienelektronik nur im Rahmen eines vordefinierten sicheren Bereichs bewegt. Wenn die Bedienelektronik ein Signal an die Kommunikationsvorrichtung versendet, welches außerhalb des zulässigen Bereichs fällt bzw. dem die Kommunikationsvorrichtung keine als zulässig vordefinierten Stellgerätebefehle zuordnen kann, wird von der Kommunikationsvorrichtung kein Stellgerätebefehl an das Stellgerät versendet, welches die Bedienelektronik zu manipulieren wünscht.

Eine weitere Hauptaufgabe der Kommunikationsvorrichtung liegt darin, Kompatibilität zu gewährleisten zwischen unterschiedlichen Stellgeräten auf der einen Seite und unterschiedlichen Bedienelektronik-Geräten auf der anderen Seite. Hinsichtlich der unterschiedlichen Stellgeräte kann die Kommunikationsvorrichtung beispielsweise bei deren Montage und/oder im Rahmen von Wartungsarbeiten einer prozesstechnischen Anlage dazu eingerichtet sein, auf das oder die Feldgeräte, mit welchen die Kommunikationsvorrichtung verbunden ist, bezogene zulässige Stellgerätebefehle zu enthalten. Ferner gestattet die Kommunikationsvorrichtung eine Kompatibilität zu unterschiedlichsten Bedienelektronik-Vorrichtungen, beispielsweise Computer- oder Webbrowser-basierten Apps, Smartphones, Tablets, Steuerungskonsolen, oder dergleichen, um es diesen zu ermöglichen, Stellgerätebefehle an ein oder mehrere Stellgeräte zu adressieren, ohne dass die Bedienelektronik hierfür speziell konfiguriert, insbesondere speziell an das zu steuernde Stellgerät angepasst, sein muss. Für den Benutzer einer Bedienelektronik ergibt sich hierdurch eine deutliche Vereinfachung der Ansteuerung eines Stellgeräts durch eine nahezu beliebige Bedienelektronik, wobei gleichzeitig durch die Kommunikationsvorrichtung fehlerhafte Ansteuerungen vermieden werden.

In der in Figur 1 dargestellten schematischen Ansicht ist die Kommunikationsvorrichtung im Allgemeinen mit der Bezugsziffer 1 versehen. Die Kommunikationsvorrichtung 1 steht in Kommunikationsverbindung mit einem Stellgerät 5 bzw. Feldgerät einer prozesstechnischen Anlage, beispielsweise einer chemischen Anlage, insbesondere einer petrochemischen Anlage, einer lebensmittelverarbeitenden Anlage, einem Kraftwerk, oder dergleichen, was im Folgenden nicht näher dargestellt ist.

Das Stellgerät 5 kann beispielsweise ein Stellventil, eine Pumpe oder dergleichen sein, um Einfluss auf eine Prozessfluidströmung einer prozesstechnischen Anlage zu nehmen. Vorzugsweise ist das Stellgerät 5 ein aktives Stellgerät mit aktiver Einstellfunktion zum Beeinflussen einer Prozessfluidströmung ausgestaltet, beispielsweise als Stellventil einer Pumpe. Das Stellgerät 5 kann alternativ auch als passives Stellgerät ohne aktive Steuerungsfunktionen lediglich mit Sensorfunktionen ausgestaltet sein.

Die Kommunikation zwischen der Kommunikationsvorrichtung 1 und dem Stellgerät 5 kann beispielsweise durch eine Kommunikationsschnittstelle mit Bus-System 15 erfolgen, etwa im Rahmen einer HART- oder Fieldbus-Systemarchitektur eines Prozesssteuerungsnetzwerks. Insbesondere kann die Verbindung zwischen der Kommunikationsvorrichtung 1 und einem Feldgerät 5 mit einer Hardware-Schnittstelle, beispielsweise als Steckkontakt, realisiert sein. Beispielsweise kann die Kommunikationsvorrichtung 1 als Zusatzmodul mit einem an den Steuerungs- und/oder Versorgungseinheiten einer prozesstechnischen Anlage eingebauten Feldgerät verbunden werden, zwischen der feldgeräteseitigen Steckbuchse und einem Steuerungs- und/oder Versorgungseinheit für dieses Feldgerät. Für eine Kommunikationsvorrichtung kann alternativ ein weiterer Kommunikations-Ein- und/oder - Ausgang eines vorhandenen Stellgeräts einer prozesstechnischen Anlage genutzt werden.

Beispielsweise kann als Stellgerät ein elektropneumatisches Feldgerät gemäß der Anmeldung DE 10 2012 021 387 B3 dienen, welches derart ausgestaltet ist, dass eine Kommunikationsvorrichtung 1 als Elektronikkomponente wie in den dortigen Absätzen [0052] bis [0054] beschrieben realisiert ist, um in einen der Steckplätze des in DE 10 2012 021 387 B3 beschriebenen Stellgeräts eingesetzt zu sein, um dem Stellgerät, das im Übrigen beispielsweise wie im Hinblick auf die dortigen Figuren 1, 3, 4, 5 oder 6 beschrieben ausgeführt sein kann, eine zusätzliche Kommunikationsschnittstelle bereitzustellen, über die das Stellgerät 1 gemäß vordefinierten zulässigen Stellgerätebefehlen von einer externen Bedienelektronik angesteuert werden kann.

Die Kommunikation von der Bedienelektronik 3 zu der Kommunikationsvorrichtung 1 erfolgt vorzugsweise zumindest abschnittsweise kabellos, vorzugsweise über ein Funknetzwerk, wie ein Mobilfunknetzwerk oder WLAN- bzw. Wifi-Netzwerk.

Die Kommunikationsvorrichtung umfasst mehrere Datenspeicher 21, 23 und 25. Ein Empfangsspeicher 21 dient zum Abspeichern des von der Bedienelektronik 3 über die Kommunikationsverbindung 13 empfangenen Signals S, das beispielsweise eine Applikation oder Anwendung sein kann, die von einem als Smartphone ausgestalten Bedienelektronik an die Kommunikationsvorrichtung 1 gesandt wurde.

Die Kommunikationsvorrichtung 1 umfasst eine Kommunikationselektronik 11, die beispielsweise einen Mikrokontroller oder Mikroprozessor aufweisen kann. Die Kommunikationselektronik 11 weist einen Interpreter auf, der die beispielsweise als Applikation in den Eingangsspeicher 21 geladenen Signale S vorzugsweise in Ausführungsabschnitte übersetzt. Ausführungsabschnitte können unabhängig von der individuellen Bedienelektronik 3 spezifisch für das mit der Kommunikationsvorrichtung 1 verbundene Stellgerät 5 definiert sein. Ausführungsabschnitte können von der Kommunikationselektronik 11 verwendet werden, um vorbestimmte zulässige Stellgerätebefehle b, beispielsweise in Form von binären Sequenzen, zum Versand über das Prozessanlagen-interne Bus-System 15, wie ein HART-System, ein Fieldbus-System oder andere Prozesssteuerungsnetzwerke, etwa wie in der oben genannten Anmeldung DE 10 2012 021 387 B3 beschrieben, an ein Stellgerät 5 zu übermitteln. Vorzugsweise können von der Kommunikationsvorrichtung 1 zulässige Stellgerätebefehle b an eine Steuerungs- und/oder Regelungselektronik, wie einen Mikroprozessor, eines Stellungsreglers eines Stellgeräts gesandt werden. Solche Stellgerätebefehle können in dem Stellgerät eine stellgerätespezifisch vorbestimmte Funktion, wie einen Partial-Stroke-Test oder dergleichen, auslösen. Ein Stellgerät 5 mit integrierter Regelungselektronik kann auch als Feldgerät bezeichnet werden.

In einem Datenspeicher 25, der als Whitelist-Speicher bezeichnet sein kann, ist eine Reihe zulässiger Stellgerätebefehle b beispielsweise in Form von binären Sequenzen hinterlegt. Vorzugsweise sind diese binären Sequenzen durch die Bedienelektronik 3 nicht veränderbar.

Bei der erfindungsgemäßen Kommunikationsvorrichtung 1 umfasst die Kommunikationselektronik 11 einen Zulässigkeitsprüfer, der sicherstellt, dass nur solche Stellgerätebefehle b von der Kommunikationsvorrichtung 1 an das mit ihr verbundene Stell- oder Feldgerät 5 versandt werden, die in dem Datenspeicher 25 vordefiniert sind. Beispielsweise kann die Kommunikationselektronik 11 dazu ausgestaltet sein, mit einem Interpreter das von der Bedienelektronik 3 empfangene Signal S in einen feldgerätespezifischen oder zumindest kommunikationsvorrichtungsspezifischen normierten Ausführungsabschnitt zu übersetzen, der die Kommunikationselektronik 11 dazu verlasst, einen bestimmten Stellgerätebefehl b an das Feldgerät 5 abzugeben. Vor dem Versand des Stellgerätebefehls b von der Kommunikationsvorrichtung 1 an das Stellgerät 5 wird allerdings durch den Zulässigkeitsprüfer der Kommunikationselektronik 11 geprüft, ob in dem Datenspeicher 25 ein dem übersetzten Stellgerätebefehl entsprechender Befehl b als zulässig vorbestimmt ist. Nur dann wird der Stellgerätebefehl b an das Feldgerät 5 ausgegeben.

Wenn hingegen die Bedienelektronik 3 ein Signal S an die Kommunikationsvorrichtung 1 sendet, welches dazu vorgesehen ist, einen unzulässigen Stellgerätebefehl a zum Weiterversand an das Feldgerät 5 zu veranlassen, so wird bei der Überprüfung festgestellt, dass dem unzulässigen Stellgerätebefehl a kein entsprechender zulässiger Stellgerätebefehl b dem Datenspeicher 25 zugeordnet ist. Der unzulässige Stellgerätebefehl a wird daher von der Kommunikationsvorrichtung 1 nicht an das Feldgerät 5 versandt.

Um die Kommunikationsvorrichtung 1 unabhängig von den herstellerseitigen Vorkonfigurationen zu gestalten, ist der Datenspeicher 25 mit einer gesicherten lokalen Schnittstelle 31 ausgestaltet, beispielsweise einem Steckkontakt unmittelbar an der Kommunikationsvorrichtung 1, über die es möglich ist, schreibend auf die in dem Datenspeicher 25 hinterlegten zulässigen Stellgerätebefehle b zuzugreifen. Vorzugsweise ist die sichere Schnittstelle 31 ausschließlich dazu ausgestaltet, eine sichere Kabelverbindungs-Kommunikation mit dem Datenspeicher 25 zuzulassen, um auf dem Datenspeicher 25 gespeicherte zulässige Stellgerätebefehle b zu modifizieren, beispielsweise zu korrigieren, zu ändern, zu löschen oder hinzuzufügen.

Über die sichere Schnittstelle 31 können weitere sicherheitsrelevante Funktionen der Kommunikationsvorrichtung 1 geändert werden, beispielsweise können zulässige Bedienerkennungen vorgegeben werden, oder bestimmten Benutzern oder bestimmten Bedienvorrichtungen administrativ Rechte zugewiesen werden, sodass für unterschiedliche Benutzer bzw. Bedienelektronik-Geräte individuell vorgebbar, vorzugsweise unterschiedliche Stellgerätebefehle zulässig sind. Berechtigungen zum Ausführen der Funktionen bzw. von bestimmten binären Sequenzen können beispielsweise als Startsignal oder Anfangssequenz (anfänglicher Ausführungsabschnitt) von einer Bedienelektronik 3 an die Kommunikationsvorrichtung 1 gesendet werden.

Die Kommunikationsvorrichtung 1 kann über einen oder mehrere weitere Messdaten- und/oder Diagnosedatenspeicher 23 verfügen. Der Messdaten- und/oder Diagnosedatenspeicher 23 ist vorzugsweise dazu ausgestaltet, von dem wenigstens einen Feldgerät 5, das mit der Kommunikationsvorrichtung 1 verbunden ist, Mess- und/oder Diagnosedaten zu erhalten. In dem Messdaten- und/oder Diagnosedatenspeicher können vorzugsweise feldgerätespezifische Betriebsdaten insbesondere mit zugeordnetem Zeitstempel gespeichert werden. Betriebsdaten können beispielsweise die Ventilstellung eines als Stellventil ausgestalteten Stellgeräts 5, eine Regeldifferenz eines aktiven Stellgeräts, Soll-Stellsignale beispielsweise von einer Leitwarte an das Stellgerät 5, Stellgerätesignatur-Informationen betreffend die Art, den Typ oder den konkreten Aufbau des Feldgeräts 5, Stellgerätehysterese-Informationen oder dergleichen sein.

Die Kommunikationsvorrichtung 1 kann dazu ausgestaltet sein, von der Bedienelektronik 3 ein Signal S zu empfangen, das eine Diagnose-Funktion in Bezug auf das mit der Kommunikationsvorrichtung 1 verbundene Feldgerät 5 veranlasst. Wenn die Kommunikationsvorrichtung 1 feststellt, dass das Signal einem zulässigen Stellgerätebefehl b entspricht, um das Feldgerät 5 zu veranlassen, eine zulässige Diagnosefunktion zu veranlassen, so sendet die Kommunikationsvorrichtung 1 den entsprechenden zulässigen Stellgerätebefehl b an das Feldgerät 5, damit dort die Diagnosefunktion durchgeführt wird. Es sei klar, dass ein Feldgerät mit eigener Steuerungs- und/oder Regelungselektronik ausgestattet sein kann, die dazu ausgestattet ist, selbsttätig eine Diagnosefunktion durchzuführen, welche lediglich durch einen Diagnose-Start-Befehl ausgelöst wird. Ebenso sei klar, dass das Stellgerät 5 entsprechend einer als Gruppe von zulässigen Stellgerätebefehlen b nacheinander empfangenen Soll-Stellwerten oder dergleichen eine durch die Kommunikationsvorrichtung 1 vorgegebene Diagnosefunktion absolvieren kann, was insbesondere dann vorteilhaft ist, wenn ein Stellgerät 5 nicht über eine eigene Steuerungs- und/oder Regelungselektronik verfügt.

In Reaktion auf die von dem Feldgerät 5 vollführte Diagnosefunktion werden in dem Diagnosedatenspeicher 23 mit der Diagnose zusammenhängende Betriebsdaten d, D gespeichert. Wenn das diagnostizierte Feldgerät 5 über eine eigene Sensorik verfügt, können die Betriebsdaten d von den Sensoren des Feldgeräts 5 versandt werden. Möglicherweise hat das Feldgerät 5 eine Steuerungs- und/oder Regelungselektronik, die Diagnoseroutinen implementiert hat, welche bereits vorbereitete Diagnoseergebnisse ausgeben können, die alternativ ebenfalls als Betriebsdaten d von dem Feldgerät 5 an die Kommunikationsvorrichtung 1 zurückgegeben werden können.

Die Kommunikationsvorrichtung 1 ist dazu ausgestaltet, Betriebsdaten D an die Bedienelektronik 3 auszugeben. Die von der Kommunikationsvorrichtung 1 an die Bedienelektronik 3 über die Kommunikationsverbindung 13 ausgegebenen Diagnoseergebnisse oder andere Bediendaten D können in einem Format ausgegeben werden, das an die Bedienelektronik 3 angepasst ist, die die Diagnose veranlasst hat. Hierzu kann der oben beschriebene oder ein weiterer Interpreter der Kommunikationselektronik 11 vorgesehen sein, der Betriebsdaten D von dem Feldgerät 5 zur Ausgabe an die Bedienelektronik 3 aufbereiten kann.

Die Bedienelektronik 3 kann dazu ausgestaltet sein, auf Basis der empfangenen Diagnose- oder anderer Betriebsdaten D, Betriebsdaten oder Protokolle, beispielsweise SIL-Protokolle, oder andere Diagnoseergebnisse auszugeben. Die Ausgabe kann beispielsweise als graphische Wiedergabe auf einem Display oder in Form eines gedruckten Protokolls oder dergleichen erfolgen.

Betriebsdaten D, die beispielsweise zyklisch in rollierender Abfolge oder kontinuierlich in festgelegten Zeitintervallen ausgelesen werden können, betreffen beispielsweise die Ventilstellung, eine Regelungsdifferenz, Soll-Stellsignale und zugeordnete Ist-Hub-Stellungen eines Stellventils sowie Ventilsignatur bzw. Hysterese-Tests, also Verlauf der Ist-Hub-Stellungen gegenüber einer Soll-Ventilstellung für eine vorbestimmte Abfolge von Soll-Stellventilen.

Typische Diagnostizierverfahren können mithilfe einer erfindungsgemäßen Kommunikationsvorrichtung bequem durch eine ferne Bedienelektronik 3, wie ein Tablet, veranlasst werden, beispielsweise um einen alternierenden Nullpunkt oder eine schleichende Nullpunktverschiebung infolge von Verschleißerscheinungen an dem Ventilsitz und/oder Ventilkegel zu ermitteln, die beispielsweise aufgrund von Verschmutzungen aufgetreten sind.

Zu Diagnosezwecken können beispielsweise Betriebsdaten D abgerufen werden, zum Beispiel mittels einer Auf-Zu-Diagnose einschließlich der darin bestimmten Ist-Hub-Endstellung, steigende und/oder fallende Laufzeiten, und/oder steigende und/oder fallende Losbrechzeiten oder dergleichen erkannt werden. Es ist auch denkbar, einen Vollhubtest durchzuführen. Die Ausgabe von verarbeitenden Betriebsdaten D durch die Bedienelektronik 3 kann beispielsweise mithilfe von Ampelfarben gemäß der einschlägigen NAMUR-Empfehlung erfolgen.

Die Kommunikationsvorrichtung kann einen verhältnismäßig großen, gegenüber üblichen Stellungsreglern 5 deutlich vergrößerten Datenspeicher 23 aufweisen, um nach Wunsch umfangreiche Dokumentationsmöglichkeiten hinsichtlich Betriebsdaten d eines Stellgeräts 5 bereitzustellen, um beispielsweise bei einer Pilotanlage eine umfangsreiche Datenerfassung zu erlauben.

Das Bus-System 15, das mit der Kommunikationsvorrichtung 1 verbunden ist, kann eine Verbindung der Kommunikationsvorrichtung 1 zu mehreren Feldgeräten 5 (nicht im Detail dargestellt), herstellen, sodass mithilfe von einer Kommunikationsvorrichtung 1 durch eine Bedienelektronik 3 Stellgerätebefehle b für wenigstens eines von mehreren Feldgeräten 5 veranlasst werden können. Auf diese Weise kann von einer Bedienelektronik 3 beispielsweise ein Teil der Stellgeräte 5 einer prozesstechnischen Anlagen durch eine externe Bedienelektronik 3 adressiert werden. Beispielsweise könnte eine Reihe von passiven Stellgeräten 5, die ausschließlich über Sensorfunktionen verfügen, und keine eigene Aktoren wie Stellventile oder Pumpen umfassen, angesprochen sein, sodass mit einer externen Bedienelektronik 3 Messdaten D von den mehreren passiven Feldgeräten 5 der prozesstechnischen Anlage über die Kommunikationsvorrichtung 1 abgefragt werden können.

Eine Kommunikationsvorrichtung 1, die über ein Bus-System 15 mit mehreren Feldgeräten 5 kommuniziert, kann auch dazu ausgestaltet sein, in Reaktion auf entsprechende Signale S von der Bedienelektronik 3 zulässige Stellgerätebefehle b an wenigstens eines von mehreren Stellgeräten 5 der prozesstechnischen Anlage zu senden. So kann beispielsweise durch eine einzige Bedienelektronik 3 veranlasst ein oder mehrere Diagnosetests gleichzeitig oder nacheinander an Stellgeräten 5 einer prozesstechnischen Anlage durchgeführt werden.

Die Kommunikationsvorrichtung 1 kann nach Art eines Multiplexers oder Hubs basierend auf Signalen S von der Bedienelektronik 3 Stellgerätebefehle b an einzelne von mehreren mit einem Bus-System 15 angebundenen Stellgeräten 5 weitergeben. Es ist auch möglich, dass in einer prozesstechnischen Anlage mehrere Feldgeräte 5 mit je einer Kommunikationsvorrichtung 1 wie oben beschrieben ausgestattet sind. Eine prozesstechnische Anlage, die mehrere Feldgeräte 5 mit einzelnen Kommunikationsvorrichtungen 1 umfasst, kann ein Netzwerk umfassen, bei dem die Kommunikationsvorrichtungen 1 und/oder Feldgeräte 5 über ein gemeinsames Bus-System 15 miteinander verbunden sind und vorzugsweise über das Bus-System 15 kommunizieren können. Als Bus-System 15 zum Versand von Stellgerätebefehlen an mehrere Feldgeräte 5 eignet sich beispielsweise ein HART-Bus-Netzwerk.

Bei einem Prozesssteuerungsnetzwerk, das mehrere Feldgeräte 5 mit jeweils einzeln zugeordneten Kommunikationsvorrichtungen 1 umfasst, können die Kommunikationsvorrichtungen 1 relativ zueinander in eine Kommunikations-Hierarchie untergliedert sein. In dem Prozesssteuerungsnetzwerk kann beispielsweise eine Kommunikationsvorrichtung 1 als Master-Kommunikationsvorrichtung den anderen Kommunikationsvorrichtungen, die als Slave-Kommunikationsvorrichtungen ausgestaltet sind, übergeordnet sein. Die Stellgerätebefehle bzw. Kommunikationssignale, die von der Master-Kommunikationsvorrichtung 1 versandt werden, können bei einer solchen Architektur eine übergeordnete Priorität in Hinblick auf die Stellgerätebefehle oder Kommunikationssignale von den (übrigen) Slave-Kommunikationsvorrichtungen genießen. Es sei klar, dass auch in einem Prozesssteuernetzwerk mit einer Master-Kommunikationsvorrichtung 1 und mehreren Slave-Kommunikationsvorrichtungen die Anzahl der durch die Kommunikationsvorrichtungen adressierten Stellgeräte 5 geringer als die Anzahl der Kommunikationsvorrichtungen sein kann, wobei einer einzigen Kommunikationsvorrichtung 1 mehrere Stellgeräte 5 zugeordnet sein können (nicht näher dargestellt).

Eine prozesstechnische Anlage, in der als Teil ihres Prozesssteuernetzwerks ein Bus-Netzwerk vorgesehen ist, das eine erfindungsgemäße Kommunikationsvorrichtung 1 umfasst, ermöglicht, diesen Teil als dezentrales Leitnetz auszugestalten, wobei die Kommunikationsvorrichtung im Rahmen der als zulässig vorgegebenen Stellgerätebefehle eine Prozesssteuerung- und/oder -regelung durchführen kann.

Denkbar ist es auch, eine prozesstechnische Anlage vollständig mit einem Prozesssteuerungsnetzwerk auszugestalten, das eine Kommunikationsvorrichtung 1 aufweist, die insbesondere als Master- Kommunikationsvorrichtung zur Steuerung- und/oder Regelung der gesamten prozesstechnischen Anlage im Rahmen der in der Kommunikationsvorrichtung als zulässig vorbestimmten Stellgerätebefehle ausgestaltet ist. Eine solche Systemarchitektur bietet sich insbesondere für kleine prozesstechnische Anlagen an oder solche prozesstechnischen Anlagen, die beispielsweise isoliert in schlecht zugänglichen Bereichen liegen und durch den Anlagenbetreiber bevorzugt von der Ferne betrieben werden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Kommunikationsvorrichtung
- 3: Bedienelektronik
- 5: Stellgerät/Feldgerät
- 11: Kommunikationselektronik
- 13: Kommunikationsverbindung
- 15: Bus-System
- 21: Empfangsspeicher
- 23: Diagnosedatenspeicher
- 25: Datenspeicher
- 31: Schnittstelle

- a, b: Stellgerätebefehle
- d, D: Betriebsdaten
- S: Signal

## Patentansprüche

1. Kommunikationsvorrichtung (1) zum Durchführen einer Steuerungs-Interaktion zwischen einer Bedienelektronik (3) und einem Stellgerät (5), beispielsweise ein Stellventil, eine Pumpe oder dergleichen, zum Einstellen einer Prozessfluidströmung einer prozesstechnischen Anlage, wie eine chemische Anlage, insbesondere eine petrochemische Anlage, eine lebensmittelverarbeitende Anlage, ein Kraftwerk oder dergleichen, das eine Steuerungs- und/oder Regelungselektronik zum Betätigen des Stellgeräts (5) gemäß einem Stellgerätebefehl aufweist, wobei die Steuerungs- und/oder Regelungselektronik dazu ausgelegt ist, in Abhängigkeit eines vordefinierten Stellgerätebefehls, wie ein Stell-Sollwert, eine vorbestimmte Funktion, insbesondere zur Betätigung des Stellgeräts (5), auszuführen,
wobei die Kommunikationsvorrichtung (1) umfasst:
eine erste Kommunikationsschnittstelle (13) zum Empfangen von elektrischen Signalen (S), wie Stellgerätebefehle (a, b), von einer Bedienelektronik (3),
eine zweite Kommunikationsschnittstelle zum Senden von elektrischen Stellgerätebefehlen (b) an das Stellgerät (5),
einen elektronischen Zulässigkeitsprüfer mit einem Datenspeicher (25), in dem eine Reihe von zulässigen Stellgerätebefehlen (b) hinterlegt ist, wobei der Zulässigkeitsprüfer dazu eingerichtet ist, in Abhängigkeit von einem mittels der ersten Kommunikationsschnittstelle (13) empfangenen elektrischen Signal (S) die zweite Kommunikationsschnittstelle zu veranlassen, entweder keinen Stellgerätebefehl oder einen der zulässigen Stellgerätebefehle (b) an das Stellgerät (5) zu senden,
wobei die Kommunikationsvorrichtung (1) dazu eingerichtet ist, Betriebsdaten (d), wie Ventilstellung, Regeldifferenz, Stellsignal, Stellgerätesignatur, Stellgerätehysterese oder dergleichen, von dem Stellgerät (5) zu empfangen, wobei der Zulässigkeitsprüfer ferner dazu eingerichtet ist, in Abhängigkeit von den Betriebsdaten (d) das Veranlassen des Versands von zulässigen Stellgerätebefehlen (b) zu gestatten und/oder zu verhindern, und/oder wobei die zweite Kommunikationsschnittstelle dazu eingerichtet ist, die Betriebsdaten (d) beim Versenden eines Stellgerätebefehls (b) zu berücksichtigen.

2. Kommunikationsvorrichtung (1) nach Anspruch 1, wobei der Zulässigkeitsprüfer dazu eingerichtet ist,
einen Vergleich eines mittels der ersten Kommunikationsschnittstelle (13) von der Bedienelektronik (3) empfangenen Signals (S) mit der Reihe von zulässigen Stellgerätebefehlen (b) durchzuführen, um zu erkennen, ob in dem Datenspeicher (25) ein zulässiger Stellgerätebefehl (b) entsprechend dem empfangenen Signal (S) hinterlegt ist,
und wobei der Zulässigkeitsprüfer ferner dazu eingerichtet ist,
falls in dem Datenspeicher (25) ein zulässiger Stellgerätebefehl (b) entsprechend dem empfangenen Signal (S) hinterlegt ist, die zweite Kommunikationsschnittstelle zu veranlassen, den zulässigen, dem empfangenen Signal (S) entsprechenden Stellgerätebefehl (b) an das Stellgerät zu senden.

3. Kommunikationsvorrichtung (1) nach Anspruch 1 oder 2, wobei der Zulässigkeitsprüfer ferner dazu eingerichtet ist, eine auf das mittels der ersten Kommunikationsschnittstelle (13) empfangene Signal bezogene Berechtigungsprüfung durchzuführen, insbesondere zu prüfen, ob das mittels der ersten Kommunikationsschnittstelle (13) empfangene Signal (S) eine Berechtigungskennung umfasst, und nur bei Erkennen einer Berechtigungskennung die zweite Kommunikationsschnittstelle zu veranlassen, einen zulässigen Stellgerätebefehl (b) zu senden.

4. Kommunikationsvorrichtung (1) nach einem der vorstehenden Ansprüche, wobei der Datenspeicher (25), in dem die Reihe von zulässigen Stellgerätebefehlen (b) hinterlegt ist, einen mechanischen und/oder elektronischen Schreibschutz aufweist, der verhindert, dass die in dem Datenspeicher (25) hinterlegten Stellgerätebefehle durch ein mittels der ersten Kommunikationsschnittstelle (13) empfangenes Signal (S) veränderbar sind, und/oder der einen Schreibzugriff auf den Datenspeicher (25) vorzugsweise exklusiv mittels einer dritten Kommunikationsschnittstelle (31), insbesondere einer Hardwareschnittstelle, unmittelbar an der Kommunikationsvorrichtung (1) zulässt.

5. Kommunikationsvorrichtung (1) nach einem der vorstehenden Ansprüche, wobei die zweite Kommunikationsschnittstelle dazu eingerichtet ist, Betriebsdaten (d), wie Ventilstellung, Regeldifferenz, Stellsignal, Stellgerätesignatur, Stellgerätehysterese oder dergleichen, von dem Stellgerät (5) zu empfangen, und/oder wobei die erste " Kommunikationsschnittstelle (13), dazu ausgelegt ist, Betriebsdaten (d, D) von dem Stellgerät (5) an die Bedienelektronik (3) zu versenden.

6. Kommunikationsvorrichtung (1) nach einem der vorstehenden Ansprüche, wobei die Kommunikationsvorrichtung (1), insbesondere deren erste Kommunikationsschnittstelle (13), eine Interpretervorrichtung umfasst, die dazu ausgelegt ist, die von einer Bedienelektronik (3) empfangenen elektrischen Signalen (S) in vorzugsweise normierte bedienelektronikunabhängige und/oder stellgerätespezifische elektrische Signale, insbesondere für den Zulässigkeitsprüfer, vorzugsweise zum Vergleich mit in dem Datenspeicher (25) hinterlegten zulässigen Stellgerätebefehlen (b), umzuwandeln.

7. System, umfassend ein Stellgerät (5), beispielsweise ein Stellventil, eine Pumpe oder dergleichen, zum Einstellen einer Prozessfluidströmung einer prozesstechnischen Anlage, wie eine chemische Anlage, insbesondere eine petrochemische Anlage, eine lebensmittelverarbeitende Anlage, ein Kraftwerk oder dergleichen, und wenigstens eine nach einem der vorstehenden Ansprüche ausgebildete Kommunikationsvorrichtung (1) und insbesondere wenigstens eine Bedienelektronik (3), wobei insbesondere mehrere Kommunikationsvorrichtungen (1) signalübertragungsgemäß insbesondere über deren jeweilige zweite Kommunikationsschnittstelle miteinander verbunden sind.

8. Steuerungs-Interaktions-Verfahren, umfassend, dass
eine Reihe von zulässigen Stellgerätebefehlen (b) definiert werden, wie Stell-Sollwerte, zum Veranlassen vorbestimmter Funktionen, insbesondere zur Betätigung
eines Stellgeräts, beispielsweise ein Stellventil, eine Pumpe oder dergleichen, vorzugsweise zum Einstellen einer Prozessfluidströmung einer prozesstechnischen Anlage, wie eine chemische Anlage, insbesondere eine petrochemische Anlage, eine lebensmittelverarbeitende Anlage, ein Kraftwerk oder dergleichen, von einer Bedienelektronik (3) ein Signal (S), wie ein Stellgerätebefehl (a, b), versandt wird,
das Signal (S) durch eine Kommunikationsvorrichtung (1) empfangen wird,
das Signal (S) durch die Kommunikationsvorrichtung (1) geprüft wird, und dass
durch die Kommunikationsvorrichtung (1) in Abhängigkeit von dem Signal (S) entweder kein Stellgerätebefehl oder einer der zulässigen Stellgerätebefehle (b) an ein Stellgerät (1) versendet wird,
wobei durch die Kommunikationsvorrichtung (1) Betriebsdaten (d), wie Ventilstellung, Regeldifferenz, Stellsignal, Stellgerätesignatur-Informationen, Stellgerätehysterese-Informationen oder dergleichen, von dem Stellgerät (5) empfangen werden, wobei die Prüfung in Abhängigkeit von den empfangenen Betriebsdaten (d) gestattet oder verhindert, dass Stellgerätebefehle (b) versendet werden, und/oder wobei die Betriebsdaten (d) beim Versenden eines Stellgerätebefehls (b) berücksichtigt werden.

9. Steuerungs-Interaktions-Verfahren nach Anspruch 8, wobei die Prüfung des Signals (S) umfasst, das geprüft wird, ob das Signal (S) einem Stellgerätebefehl der Reihe zulässiger Stellgerätebefehle (b) entspricht, und wobei der dem Signal (S) entsprechende Stellgerätebefehl (b) versendet wird.

10. Steuerungs-Interaktions-Verfahren nach Anspruch 8 oder 9, wobei eine auf das empfangene Signal (S) bezogene Berechtigungsprüfung durchgeführt wird, wobei insbesondere geprüft wird, ob das empfangene Signal (S) eine Berechtigungskennung umfasst, und wobei nur dann, wenn eine Berechtigungskennung erkannt wird, ein zulässiger Stellgerätebefehl (b) versendet wird.

11. Steuerungs-Interaktions-Verfahren nach einem der Ansprüche 8 bis 10, wobei das Definieren der Reihe von zulässigen Stellgerätebefehlen (b) umfasst, dass ein mechanischer und/oder elektronischer Schreibschutz der Kommunikationsvorrichtung (1) deaktiviert wird, der insbesondere in seinem standardmäßig aktivierten Zustand verhindert, dass die insbesondere in einem Datenspeicher (25) hinterlegten zulässigen Stellgerätebefehle (b) durch ein vorzugsweise mittels der ersten Kommunikationsschnittstelle (13) und/oder von einer Bedienelektronik (3) empfangenes Signal (S) verändert werden, und/oder wobei das Definieren der Reihe von zulässigen Stellgerätebefehlen (b) exklusiv über eine dritte Kommunikationsschnittstelle (31) durchgeführt werden kann.

12. Steuerungs-Interaktions-Verfahren nach einem der Ansprüche 8 bis 11, wobei durch die Kommunikationsvorrichtung (1) Betriebsdaten (d), wie Ventilstellung, Regeldifferenz, Stellsignal, Stellgerätesignatur-Informationen, Stellgerätehysterese-Informationen oder dergleichen, von dem Stellgerät (5) empfangen werden und/oder wobei durch die Kommunikationsvorrichtung (1), insbesondere durch deren erste Kommunikationsschnittstelle (13), Betriebsdaten (d, D) von dem Stellgerät (5) an die Bedienelektronik (3) versendet werden.

13. Steuerungs-Interaktions-Verfahren nach einem der Ansprüche 8 bis 12, wobei nach dem Signalempfang und vorzugsweise vor der Signalprüfung das Signal insbesondere durch eine Interpretervorrichtung in ein vorzugsweise normiertes bedienelektronikunabhängiges und/oder stellgerätespezifisches Signalformat, insbesondere für die Signalprüfung, vorzugsweise zum Vergleich mit den definierten zulässigen Stellgerätebefehlen, umgewandelt wird.

## Claims

1. Communication device (1) for carrying out a control interaction between an operating electronics (3) and an actuator (5), for example a control valve, a pump or the like, for setting a process fluid flow of a process plant, such as a chemical plant, in particular a petrochemical plant, a food-processing plant, a power plant or the like, which has control and/or regulating electronics for actuating the actuator (5) in accordance with an actuator command, the control and/or regulating electronics being configured to carry out a predetermined function, in particular for actuating the actuator (5), in dependence on a predefined actuator command, such as an actuating setpoint value,
the communication device (1) comprising:
a first communication interface (13) for receiving electrical signals (S), such as actuator commands (a, b), from the operating electronics (3),
a second communication interface for sending electrical actuator commands (b) to the actuator (5),
an electronic permissibility checker having a data memory (25) in which a series of permissible actuator commands (b) is stored, the permissibility checker being configured to, depending on an electrical signal (S) received by means of the first communication interface (13), cause the second communication interface to either send no actuator command or one of the permissible actuator commands (b) to the actuator (5),
wherein the communication device (1) is set up to receive operating data (d), such as valve position, control difference, control signal, actuator signature, actuator hysteresis or the like, from the actuator (5), wherein the permissibility checker is furthermore set up to permit and/or prevent the transmission of permissible actuator commands (b) in dependence on the operating data (d), and/or the second communication interface is set up to take account of the operating data (d) when an actuator command (b) is transmitted.

2. A communication device (1) according to claim 1, wherein the permissibility checker is configured to perform a comparison of a signal (S) received by means of the first communication interface (13) from the operating electronics (3) with the series of permissible actuator commands (b) in order to detect whether a permissible actuator command (b) corresponding to the received signal (S) is stored in the data memory (25), and wherein the permissibility checker is further configured to, if a permissible actuator command (b) corresponding to the received signal (S) is stored in the data memory (25), to cause the second communication interface to send the permissible actuator command (b) corresponding to the received signal (S) to the actuator.

3. Communication device (1) according to claim 1 or 2, the permissibility checker also being configured to carry out an authorization check relating to the signal received by means of the first communication interface (13), in particular to check whether the signal (S) received by means of the first communication interface (13) comprises an authorization identifier, and to cause the second communication interface to send an permissible actuator command (b) only if an authorization identifier is detected.

4. Communication device (1) according to one of the preceding claims, the data memory (25), in which the series of permissible actuator commands (b) is stored, having a mechanical and/or electronic write protection which prevents the actuator commands stored in the data memory (25) from being changed by a signal (S) received by means of the first communication interface (13) and/or which permits write access to the data memory (25), preferably exclusively by means of a third communication interface (31), in particular a hardware interface, directly at the communication device (1).

5. Communication device (1) according to one of the preceding claims, wherein the second communication interface is configured to receive operating data (d), such as valve position, control difference, control signal, actuator signature, actuator hysteresis or the like, from the actuator (5), and/or wherein the first communication interface (13) is configured to transmit operating data (d, D) from the actuator (5) to the operating electronics (3).

6. Communication device (1) according to one of the preceding claims, the communication device (1), in particular its first communication interface (13), comprising an interpreter device which is configured to convert electrical signals (S) received by the operating electronics (3) into preferably standardized electrical signals independent of the operating electronics and/or specific to the actuator, in particular for the permissibility checker, preferably for comparison with permissible actuator commands (b) stored in the data memory (25).

7. System, comprising an actuator (5), for example a control valve, a pump or the like, for setting a process fluid flow of a process-technical plant, such as a chemical plant, in particular a petrochemical plant, a food-processing plant, a power plant or the like, and at least one communication device (1) configured in accordance with one of the above claims and, in particular, at least one operating electronics (3), in particular a plurality of communication devices (1) being connected to one another in accordance with signal transmission, in particular via their respective second communication interface.

8. Control-interaction method comprising that
a series of permissible actuator commands (b) are defined, such as setpoint values, for initiating predetermined functions, in particular for actuating an actuator, for example a control valve, a pump or the like, preferably for setting a process fluid flow of a process-engineering plant, such as a chemical plant, in particular a petrochemical plant, a food-processing plant, a power plant or the like,
a signal (S), such as an actuator command (a, b), is transmitted by an operating electronics (3),
the signal (S) is received by a communication device (1),
the signal (S) is tested by the communication device (1), and that
either no actuator command or one of the permissible actuator commands (b) is sent to an actuator (1) by the communication device (1) as a function of the signal (S).

9. Control-interaction method according to claim 8, wherein the testing comprises the signal (S) which is tested to see whether the signal (S) corresponds to an actuator command of the series of permissible actuator commands (b), and wherein the actuator command (b) corresponding to the signal (S) is transmitted.

10. Control-interaction method according to claim 8 or 9, an authorization check relating to the received signal (S) being carried out, in particular it being checked whether the received signal (S) comprises an authorization identifier, and a permissible actuator command (b) being transmitted only if an authorization identifier is recognized.

11. Control-interaction method according to one of the claims 8 to 10, wherein defining the series of permissible actuator commands (b) comprises deactivating a mechanical and/or electronic write protection of the communication device (1) which prevents in particular in its standard activated state, that the permissible actuator commands (b), which are stored in particular in a data memory (25), are changed by a signal (S) which is received preferably by means of the first communication interface (13) and/or by operating electronics (3), and/or wherein the series of permissible actuator commands (b) can be defined exclusively via a third communication interface (31).

12. Control-interaction method according to one of the claims 8 to 11, wherein operating data (d), such as valve position, control difference, actuating signal, actuator signature information, actuator hysteresis information or the like, are received by the communication device (1) from the actuator (5), wherein in particular the testing is permitted or prevented as a function of the received operating data (d), in that actuator commands (b) are transmitted, and/or the operating data (d) being taken into account when an actuator command (b) is transmitted, and/or operating data (d, D) being transmitted from the actuator (5) to the operating electronics (3) by the communication device (1), in particular by its first communication interface (13).

13. Control-interaction method according to one of the claims 8 to 12, wherein after signal reception and preferably before signal testing, the signal is converted in particular by an interpreter device into a preferably standardized signal format independent of operating electronics and/or specific to the actuator, in particular for signal testing, preferably for comparison with the defined permissible actuator commands.

## Revendications

1. Dispositif de communication (1) pour l'exécution d'une interaction de commande entre une électronique d'actionnement (3) et un appareil de réglage (5), par exemple une soupape de réglage, une pompe ou autre, pour le réglage d'un flux de fluide de processus d'une installation technique de processus, telle qu'une installation chimique, en particulier une installation pétrochimique, une installation de transformation de produits alimentaires, une centrale électrique ou similaire, présentant une électronique de commande et/ou de régulation pour l'activation de l'appareil de réglage (5) conformément à un ordre d'appareil de réglage, dans lequel l'électronique de commande et/ou de régulation est conçue pour exécuter une fonction prédéterminée conformément à un ordre d'appareil de réglage, tel qu'une valeur de consigne de réglage, en particulier pour l'activation de l'appareil de réglage (5), le dispositif de communication (1) comportant :
une première interface de communication (13) destinée à recevoir des signaux électriques (S), tels que des ordres d'appareil de réglage (a, b), en provenance d'une électronique d'actionnement (3),
une deuxième interface de communication destinée à envoyer des ordres d'appareil de réglage électriques (b) à l'appareil de réglage (5),
un contrôleur d'autorisation électronique avec une mémoire de données (25) dans laquelle est enregistrée une série d'ordres d'appareil de réglage électriques (b), le contrôleur d'autorisation étant conçu pour inciter la deuxième interface de communication à ne pas envoyer d'ordre d'appareil de réglage ou à envoyer un ordre d'appareil de réglage (b) autorisé à l'appareil de réglage (5), en fonction d'un signal électrique (S) reçu par le biais de la première interface de communication (13),
dans lequel le dispositif de communication (1) est conçu pour recevoir des données de fonctionnement (d), telles que la position de soupape, la différence de réglage, le signal de réglage, la signature d'appareil de réglage, l'hystérésis d'appareil de réglage ou autres, en provenance de l'appareil de réglage (5), dans lequel le contrôleur d'autorisation est en outre conçu pour permettre et/ou empêcher l'incitation de l'envoi d'ordres d'appareil de réglage (b) autorisés, en fonction des données de fonctionnement (d), et/ou dans lequel la deuxième interface de communication est conçue pour prendre en compte des données de fonctionnement (d) lors de l'envoi d'un ordre d'appareil de réglage (b).

2. Dispositif de communication (1) selon la revendication 1, dans lequel le contrôleur d'autorisation est conçu pour
effectuer une comparaison entre un signal (S) reçu depuis l'électronique d'actionnement (3) par le biais de la première interface de communication (13) et la série d'ordres d'appareil de réglage (b) autorisés, afin de détecter si un ordre d'appareil de réglage (b) autorisé correspondant au signal (S) reçu est enregistré dans la mémoire de données (25),
et dans lequel le contrôleur d'autorisation est en outre conçu pour,
si un ordre d'appareil de réglage (b) autorisé correspondant au signal (S) reçu est enregistré dans la mémoire de données (25), inciter la deuxième interface de communication à envoyer l'ordre d'appareil de réglage (b) autorisé correspondant au signal (S) reçu à l'appareil de réglage.

3. Dispositif de communication (1) selon la revendication 1 ou 2, dans lequel le contrôleur d'autorisation est en outre conçu pour effectuer un contrôle d'autorisation en rapport avec le signal reçu par le biais de la première interface de communication (13), en particulier pour contrôler si le signal (S) reçu par le biais de la première interface de communication (13) comporte un identifiant d'autorisation, et pour inciter la deuxième interface de communication à envoyer un ordre d'appareil de réglage (b) autorisé uniquement en cas de détection d'un identifiant d'autorisation.

4. Dispositif de communication (1) selon l'une des revendications précédentes, dans lequel la mémoire de données (25) dans laquelle est enregistrée la série d'ordres d'appareil de réglage (b) autorisés présente une protection en écriture mécanique et/ou électronique, empêchant la modification des ordres d'appareil de réglage enregistrés dans la mémoire de données (25) par un signal (S) reçu par le biais de la première interface de communication (13), et/ou autorisant un accès en écriture à la mémoire de données (25), de préférence exclusivement par le biais d'une troisième interface de communication (31), en particulier d'une interface matérielle, directement au niveau du dispositif de communication (1).

5. Dispositif de communication (1) selon l'une des revendications précédentes, dans lequel la deuxième interface de communication est conçue pour recevoir des données de fonctionnement (d), telles que la position de soupape, la différence de réglage, le signal de réglage, la signature d'appareil de réglage, l'hystérésis d'appareil de réglage ou autres, en provenance de l'appareil de réglage (5), et/ou dans lequel la première interface de communication (13) est conçue pour envoyer des données de fonctionnement (d, D) de l'appareil de réglage (5) à l'électronique d'actionnement (3) .

6. Dispositif de communication (1) selon l'une des revendications précédentes, dans lequel le dispositif de communication (1), en particulier la première interface de communication (13) de celui-ci, comporte un dispositif d'interprétation conçu pour transformer les signaux électriques (S) reçus depuis une électronique d'actionnement (3) en signaux électriques de préférence normalisés, indépendants de l'électronique d'actionnement et/ou spécifiques à l'appareil de réglage, en particulier pour le contrôleur d'autorisation, de préférence pour la comparaison avec des ordres d'appareil de réglage (b) autorisés enregistrés dans la mémoire de données (25).

7. Système comportant un appareil de réglage (5), par exemple une soupape de réglage, une pompe ou autre, pour le réglage d'un flux de fluide de processus d'une installation technique de processus, telle qu'une installation chimique, en particulier une installation pétrochimique, une installation de transformation de produits alimentaires, une centrale électrique ou similaire, ainsi qu'au moins un dispositif de communication (1) selon l'une des revendications précédentes, et en particulier au moins une électronique de commande (3), dans lequel plusieurs dispositifs de communication (1) sont en particulier reliés entre eux par transmission de signaux, en particulier par le biais de leur deuxième interface de communication respective.

8. Procédé d'interaction de commande, **caractérisé par**
la définition d'une série d'ordres d'appareil de réglage (b) autorisés, tels que des valeurs de consigne de réglage, pour l'exécution de fonctions prédéfinies, en particulier pour l'actionnement d'un appareil de réglage, par exemple d'une soupape de réglage, d'une pompe ou autre, de préférence pour le réglage d'un flux de fluide de processus d'une installation technique de processus, telle qu'une installation chimique, en particulier une installation pétrochimique, une installation de transformation de produits alimentaires, une centrale électrique ou similaire,
l'envoi d'un signal (S), tel qu'un ordre d'appareil de réglage (a, b) par une électronique d'actionnement (3),
la réception du signal (S) par un dispositif de communication (1),
le contrôle du signal (S) par le dispositif de communication (1), et en ce que
le dispositif de communication (1) n'envoie aucun ordre d'appareil de réglage ou envoie l'un des ordres d'appareil de réglage (b) autorisés à un appareil de réglage (1) en fonction du signal (S),
dans lequel des données de fonctionnement (d), telles que la position de soupape, la différence de réglage, le signal de réglage, des informations de signature d'appareil de réglage, des informations d'hystérésis d'appareil de réglage ou autres, sont reçues par le dispositif de communication (1) en provenance de l'appareil de réglage (5), dans lequel le contrôle autorise ou empêche l'envoi d'ordres d'appareil de réglage (b) en fonction des données de fonctionnement (d) reçues, et/ou dans lequel les données de fonctionnement (d) sont prises en compte lors de l'envoi d'un ordre d'appareil de réglage (b).

9. Procédé d'interaction de commande selon la revendication 8, dans lequel le contrôle du signal (S) comporte le fait de contrôler si le signal (S) correspond à un ordre d'appareil de réglage parmi la série d'ordres d'appareil de réglage (b) autorisés, et dans lequel l'ordre d'appareil de réglage (b) correspondant au signal (S) est envoyé.

10. Procédé d'interaction de commande selon la revendication 8 ou 9, dans lequel un contrôle d'autorisation est effectué en rapport avec le signal (S) reçu, visant en particulier à contrôler si le signal (S) reçu comporte un identifiant d'autorisation, et dans lequel un ordre d'appareil de réglage (b) autorisé est envoyé uniquement en cas de détection d'un identifiant d'autorisation.

11. Procédé d'interaction de commande selon l'une des revendications 8 à 10, dans lequel la définition de la série d'ordres d'appareil de réglage (b) autorisés comporte la désactivation d'une protection en écriture mécanique et/ou électronique du dispositif de communication (1), laquelle empêche, en particulier dans son état activé par défaut, la modification des ordres d'appareil de réglage (b) autorisés, en particulier enregistrés dans la mémoire de données (25), par un signal (S) reçu de préférence par le biais de la première interface de communication (13) et/ou en provenance d'une électronique d'actionnement (3), et/ou dans lequel la définition de la série d'ordres d'appareil de réglage (b) autorisés peut être effectuée exclusivement par le biais d'une troisième interface de communication (31).

12. Procédé d'interaction de commande selon l'une des revendications 8 à 11, dans lequel des données de fonctionnement (d), telles que la position de soupape, la différence de réglage, le signal de réglage, des informations de signature d'appareil de réglage, des informations d'hystérésis d'appareil de réglage ou autres, sont reçues par le dispositif de communication (1) en provenance de l'appareil de réglage (5) et/ou dans lequel des données de fonctionnement (d, D) sont envoyées de l'appareil de réglage (5) à l'électronique d'actionnement (3) par le dispositif de communication (1), en particulier par la première interface de communication (13) de celui-ci.

13. Procédé d'interaction de commande selon l'une des revendications 8 à 12, dans lequel, après la réception du signal et de préférence avant le contrôle du signal, le signal est transformé, en particulier par un dispositif d'interprétation, en un format de signal de préférence normalisé, indépendant de l'électronique d'actionnement et/ou spécifique à l'appareil de réglage, en particulier pour le contrôle du signal, de préférence pour la comparaison avec les ordres d'appareil de réglage autorisés définis.
